# FASCICULE DE BREVET EUROPEEN

(11) **EP 3 009 878 B1**
(45) Date de publication et mention de la délivrance du brevet: **25.04.2018**
(21) Numéro de dépôt: 15306642.8
(22) Date de dépôt: 15.10.2015
(51) Int. Cl.: G02F 1/035

(54) **MODULATEUR DE PHASE ÉLECTRO-OPTIQUE**
ELEKTROOPTISCHER PHASENMODULATOR
ELECTRO-OPTICAL PHASE MODULATOR

(30) Priorité: 15.10.2014 FR 1459893
(43) Date de publication de la demande: 20.04.2016
(73) Titulaire: IXBLUE, 78100 Saint-Germain-en-Laye (FR)
(72) Inventeur: PORTE, Henri, 25770 Serres les Sapins (FR); GROSSARD, Nicolas, 25170 Audeux (FR)
(74) Mandataire: Jacobacci Coralis Harle

(56) Documents cités:
- FR-A1- 2 986 082
- JP-A- H09 318 367
- JP-A- H10 142 566
- JP-A- 2009 244 812
- US-A1- 2006 098 910
- ZHU N H ET AL: "Proposal for high extinction ratio LiNbO<E7>3</E7> optical waveguide cutoff modulator", IEE PROCEEDINGS: OPTOELECTRONICS, INSTITUTION OF ELECTRICAL ENGINEERS, STEVENAGE, GB, vol. 142, no. 5, 1 octobre 1995 (1995-10-01), pages 248-50, XP006004321, ISSN: 1350-2433, DOI: 10.1049/IP-OPT:19952160
- "Practical Uses and Applications of Electro-Optic Modulators", , 28 décembre 1993 (1993-12-28), XP055209374, Extrait de l'Internet: URL:http://www.physics.montana.edu/oct/cts eminar/Practical Uses of EOMs.pdf [extrait le 2015-08-25]

## Description

La présente invention concerne de manière générale le domaine des modulateurs optiques pour le contrôle des signaux lumineux.

Elle concerne plus particulièrement un modulateur de phase électro-optique destiné à moduler la phase optique d'une onde lumineuse incidente sur le modulateur.

Un modulateur de phase électro-optique est un dispositif opto-électronique qui permet de moduler la phase optique d'une onde lumineuse qui est incidente sur le modulateur et qui le traverse, en fonction d'un signal électrique qui lui est appliqué.

Il est connu de l'art antérieur une catégorie particulière de modulateurs de phase électro-optiques, dits modulateurs intégrés ou modulateurs en optique guidée, qui comportent :
- un substrat optiquement transparent comprenant une face d'entrée, une face de sortie, deux faces latérales, une face inférieure et une face supérieure, lesdites faces inférieure et supérieure s'étendant entre la face d'entrée et la face de sortie, ladite face supérieure étant plane et opposée à ladite face inférieure,
- un unique guide d'onde optique qui s'étend, dans un plan parallèle à ladite face supérieure, entre une extrémité d'entrée de guide située sur ladite face d'entrée du substrat et une extrémité de sortie de guide située sur ladite face de sortie du substrat, ladite onde lumineuse incidente étant partiellement couplée dans ledit guide d'onde optique en une onde lumineuse guidée se propageant de manière guidée optiquement suivant le chemin optique dudit guide d'onde optique entre ladite extrémité d'entrée et ladite extrémité de sortie de guide, et
- au moins deux électrodes qui sont disposées au moins partiellement le long dudit guide d'onde, parallèlement et de part et d'autre de celui-ci et qui définissent entre elles un espace inter-électrodes, lesdites au moins deux électrodes permettant d'introduire, lorsqu'une tension de modulation est appliquée entre lesdites électrodes, un déphasage de modulation, fonction de ladite tension de modulation, sur ladite onde lumineuse guidée se propageant dans ledit guide d'onde optique.

Dans la présente demande, on entendra par substrat électro-optique, un substrat formé d'un seul bloc, c'est-à-dire que le substrat électro-optique ne constitue pas la couche électro-optique d'une structure optique plus globale tel qu'un empilement comportant le substrat électro-optique, une ou plusieurs couches intermédiaires, et un support pour la tenue mécanique de la structure.

La polarisation des électrodes de modulation avec la tension de modulation permet, par effet électro-optique dans le substrat, de faire varier l'indice de réfraction optique du guide d'onde dans lequel se propage l'onde lumineuse guidée, en fonction de cette tension de modulation.

Cette variation d'indice de réfraction optique du guide d'onde introduit alors un déphasage de modulation, avance ou retard de phase, en fonction du signe de la tension de modulation, sur la phase optique de l'onde lumineuse guidée traversant le guide d'onde.

Ceci se traduit en sortie du modulateur par une modulation de la phase optique de l'onde lumineuse émergente.

En théorie, un tel modulateur de phase électro-optique ne module que la phase optique de l'onde lumineuse guidée se propageant dans le guide d'onde optique. Aussi, si l'on place un photo-détecteur sur la trajectoire de l'onde lumineuse émergente en sortie de ce modulateur, alors la puissance optique (en Watt) mesurée par ce photo-détecteur sera constante et indépendante du déphasage de modulation introduit sur l'onde lumineuse guidée grâce aux électrodes de modulation.

En pratique, cependant, la puissance optique mesurée n'est pas constante et on détecte une faible variation de la puissance optique à la sortie du modulateur de phase.

Cette modulation d'amplitude résiduelle ou « RAM » (pour « *Residual Amplitude Modulation* » en anglais) s'avère dans certains cas non négligeable de sorte que les performances du modulateur de phase sont dégradées.

En effet, à l'extrémité d'entrée de guide, lors de l'injection de l'onde lumineuse incidente dans le guide d'onde optique, une partie de cette onde lumineuse incidente n'est pas couplée au guide d'onde mais est diffractée au niveau de la face d'entrée, de sorte qu'une onde lumineuse rayonne et se propage alors dans le substrat de manière non guidée hors du guide d'onde.

Cette onde lumineuse non guidée présente une extension spatiale transverse, dans un plan perpendiculaire au guide d'onde, qui par diffraction s'accroît jusqu'à la face de sortie du substrat.

En d'autres termes, le faisceau lumineux associé à l'onde lumineuse non guidée présente une divergence angulaire qui s'accroît au cours de la propagation du faisceau lumineux dans le substrat, hors du guide d'onde.

Une partie de l'onde lumineuse non guidée peut alors se recoupler en sortie du modulateur, contribuant à la modulation d'amplitude résiduelle précitée.

On connait du document JP H09 318367 un circuit d'optique intégré comportant un substrat dans lequel est formé un guide d'onde optique, et qui est pourvu d'électrodes permettant de moduler la phase des ondes lumineuses sortant du circuit. Deux sillons gravés sur une face supérieure du substrat forment une chicane qui permet de bloquer une telle onde lumineuse non guidée.

Dans ce contexte, la présente invention propose un modulateur de phase électro-optique permettant de réduire la modulation d'amplitude résiduelle en sortie de ce modulateur.

À cet effet, l'invention concerne un modulateur de phase électro-optique tel que défini en introduction, dans lequel ledit guide d'onde optique présente au moins une première portion courbe de guide entre ladite extrémité d'entrée et lesdites au moins deux électrodes, de telle sorte que le prolongement d'une direction tangente audit guide d'onde sur ladite face d'entrée s'écarte dudit espace inter-électrodes.

Plus précisément, l'écart H introduit ainsi par ladite première partie courbe de guide est supérieur à une valeur seuil Hₘᵢₙ prédéterminée, cet écart H correspondant à la distance entre ladite direction tangente et un bord interne d'une première électrode située entre ledit guide d'onde optique et ladite direction tangente, cette distance étant mesurée dans un plan avant perpendiculaire à ladite tangente comprenant un bord avant de ladite première électrode.

Selon l'invention, ladite valeur seuil Hₘᵢₙ prédéterminée est supérieure ou égale à la moitié d'une extension spatiale w présentée, dans ledit plan avant, par l'onde lumineuse qui se propage de manière non guidée dans ledit substrat.

Le dispositif selon l'invention permet ainsi de réduire le couplage entre l'onde lumineuse guidée dans le guide d'onde optique et une onde lumineuse qui se propage de manière non guidée optiquement dans le substrat électro-optique.

Sans précautions particulières, lorsqu'une tension électrique, dite tension de modulation, est appliquée entre les électrodes, il apparaît qu'une partie de l'onde lumineuse se propageant de manière non guidée dans le substrat peut être piégée puis guidée dans une zone de modulation d'indice qui s'étend dans le substrat à partir de l'espace inter-électrodes, cette zone de modulation d'indice s'étendant spatialement autour du guide d'onde optique dans une direction transverse à celui-ci, sur une distance au moins égale à la dimension des électrodes le long du guide d'onde.

Grâce à la première portion courbe de guide, on décale l'espace inter-électrodes par rapport à la direction tangente au guide d'onde sur la face d'entrée qui correspond à la direction principale de propagation de l'onde lumineuse non guidée dans le substrat.

Ainsi, cette configuration permet d'éviter que l'onde lumineuse non guidée, qui se propage dans le substrat électro-optique de manière centrée autour de cette direction tangente, soit piégée et confinée dans l'espace inter-électrodes puis se recouvre avec l'onde lumineuse guidée au niveau de l'extrémité de sortie de guide, de sorte que ces deux ondes lumineuses interfèrent entre elles, donnant ainsi naissance à la modulation d'amplitude résiduelle mentionnée.

Par conséquent, grâce à l'invention, les interférences entre l'onde lumineuse guidée et l'onde lumineuse non guidée en sortie du modulateur sont considérablement réduites.

De cette façon, la modulation d'amplitude résiduelle est fortement atténuée.

Par ailleurs, d'autres caractéristiques avantageuses et non limitatives du modulateur de phase électro-optique selon l'invention sont les suivantes :
- ledit guide d'onde optique présente au moins une deuxième portion courbe de guide entre lesdites au moins deux électrodes et ladite extrémité de sortie de guide ;
- ladite première et/ou ladite deuxième portion courbe de guide présente une forme de S ;
- ladite première et/ou ladite deuxième portion courbe de guide présente un rayon de courbure R_{C} dont la valeur est supérieure à une valeur minimale R_{C,min} prédéterminée de sorte que les pertes optiques induites par chaque portion courbe sont inférieures à 0,5 dB ;
- ladite valeur minimale R_{C,min} du rayon de courbure de chaque portion courbe de guide est supérieure ou égale à 20 mm.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue de dessus d'un premier mode de réalisation d'un modulateur de phase électro-optique selon l'invention comportant une paire d'électrodes de modulation et connecté en entrée et en sortie à une section de fibre optique ;
- la figure 2 est une vue en coupe transversale du modulateur de phase de la figure 1 selon le plan de coupe A-A ;
- la figure 3 est une vue en projection du modulateur de la figure 1 dans un plan de projection perpendiculaire au plan de coupe A-A qui comprend les deux extrémités de guide 121, 122 ;
- la figure 4 représente une vue de dessus d'un deuxième mode de réalisation d'un modulateur de phase électro-optique selon l'invention comportant trois électrodes de modulation ;
- la figure 5 représente une vue schématique du fonctionnement du dispositif de la figure 1 dans laquelle sont représentés les modes optiques associés aux ondes lumineuses guidée et non guidée ;
- la figure 6 représente une vue de dessus d'un troisième mode de réalisation d'un modulateur de phase électro-optique selon l'invention comportant une deuxième portion courbe de guide et dans laquelle sont représentés les modes optiques associés aux ondes lumineuses guidée et non guidée ;
- la figure 7 représente une vue de dessus d'une variante du troisième mode de réalisation d'un modulateur de phase électro-optique selon l'invention dans laquelle le modulateur comporte deux paires supplémentaires d'électrodes de polarisation disposées de part et d'autre des première et deuxième portions courbes de guide.

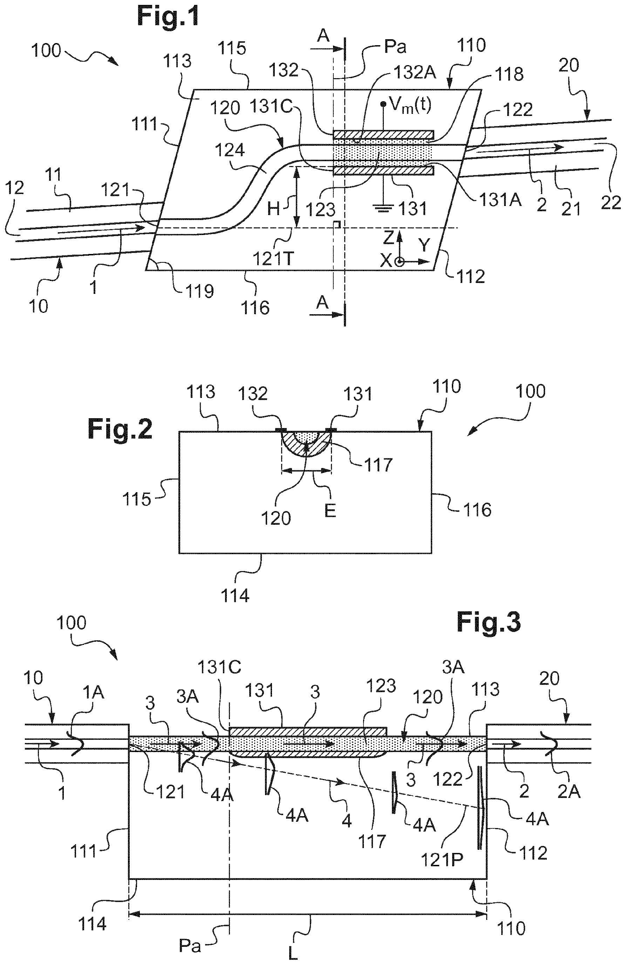

On a représenté sur les figures 1 à 7 différents modes de réalisation d'un modulateur 100 de phase électro-optique, ainsi que certaines de leurs variantes.

De manière générale, ce modulateur 100 est destiné à moduler, en fonction du temps, la phase optique d'une onde lumineuse incidente 1 (représentée ici par une flèche, cf. figure 1 par exemple) sur le modulateur 100.

Un tel modulateur 100 trouve de nombreuses applications en optique, notamment en télécommunications par fibre optique pour la transmission de données, dans les capteurs interférométriques pour le traitement de l'information, ou encore dans l'asservissement dynamique de cavités laser.

Le modulateur 100 comprend tout d'abord un substrat 110 optiquement transparent.

Ce substrat 110 comprend, d'une part, une face d'entrée 111 et, d'autre part, une face de sortie 112. Il présente ici une géométrie planaire avec deux faces latérales 115, 116, une face inférieure 114 et une face supérieure 113 (voir figures 1 et 2 par exemple), la face supérieure 113 étant plane et opposée à la face inférieure 114.

La face inférieure 114 et la face supérieure 113 s'étendent ainsi entre la face d'entrée 111 et la face de sortie 112 du substrat 110 en étant parallèle l'une à l'autre.

De la même manière, comme le montrent les figures 1 et 2, la face d'entrée 111 et la face de sortie 112 sont également ici parallèles l'une à l'autre, comme le sont les faces latérales 115, 116.

Le substrat 110 a ainsi la forme d'un parallélépipède.

De préférence, ce parallélépipède est non droit et le substrat 110 est tel que la face d'entrée 111 et l'une des faces latérales (ici la face latérale 116, voir figure 1) présente un angle 119 inférieur à 90°, compris entre 80° et 89,9°, par exemple égal à 85°.

On comprendra dans la suite de la description l'avantage d'un tel angle 119 pour améliorer les performances du modulateur 100 de phase.

Comme le montrent les figures 2 et 3, le substrat 110 est mono-bloc et formé d'un seul bloc de cristal de niobate de lithium.

Le substrat 110 présente de préférence une épaisseur, entre la face inférieure 114 et la face supérieure 113, strictement supérieure à 20 microns. Encore plus préférentiellement, l'épaisseur du substrat 110 est comprise entre 30 microns et 1 millimètre.

Par ailleurs, le substrat 110 présente de préférence une longueur entre la face d'entrée 111 et la face de sortie 112, qui est comprise entre 10 et 100 millimètres.

De préférence encore, le substrat 110 présente une largeur, mesurée entre les deux faces latérales 115, 116, qui est comprise entre 0,5 millimètres et 100 millimètres.

Le substrat 110 est un substrat électro-optique qui présente de la biréfringence du premier ordre induite par un champ électrique statique ou variable, encore appelée effet *Pockels.*

Ce substrat 110 électro-optique est de préférence formé d'un cristal de niobate de lithium, de formule chimique LiNbO₃, ce matériau présentant un effet *Pockels* important.

Le substrat 110 présente par ailleurs un indice nₛ de réfraction optique compris entre 2,25 et 2,13 pour une gamme de longueurs d'onde comprise entre 400 nanomètres (nm) et 1600 nm.

En variante, le substrat électro-optique du modulateur de phase peut être un cristal de tantalate de lithium (LiTaO₃).

En variante encore, ce substrat électro-optique peut être en matériau polymère ou en matériau semi-conducteur, par exemple en silicium (Si) ou en arséniure de gallium (GaAs).

Le substrat 110 du modulateur étant ici un cristal de niobate de lithium, celui-ci présente une biréfringence intrinsèque, qui peut se soustraire ou s'additionner avec une biréfringence induite par un champ électrique, et il importe de préciser la géométrie et l'orientation de ce substrat 110 par rapport aux axes de ce cristal.

Dans les premier et troisième modes de réalisation de l'invention représentés respectivement sur les figures 1-3, 5 et 6-7, le substrat 110 est ainsi coupé selon l'axe X du cristal de LiNbO₃ de sorte que la face supérieure 113 du substrat 110 soit parallèle au plan Y-Z du cristal (voir figure 1). Et plus précisément encore, l'axe Y du cristal est ici orienté parallèlement aux faces latérales 115, 116 du substrat 110 électro-optique.

Par convention, pour le niobate de lithium, l'axe Z est parallèle à l'axe C ou a3 de la maille du cristal. L'axe Z est perpendiculaire à l'axe X du cristal qui est lui-même parallèle à l'axe a1 de la maille. L'axe Y est perpendiculaire à la fois à l'axe Z et à l'axe X. L'axe Y est tourné de 30° par rapport à l'axe a2 de la maille, lui-même orienté à 120° de l'axe a1 et à 90° de l'axe a3. Les coupes et orientations des faces du cristal se réfèrent généralement aux axes X, Y et Z.

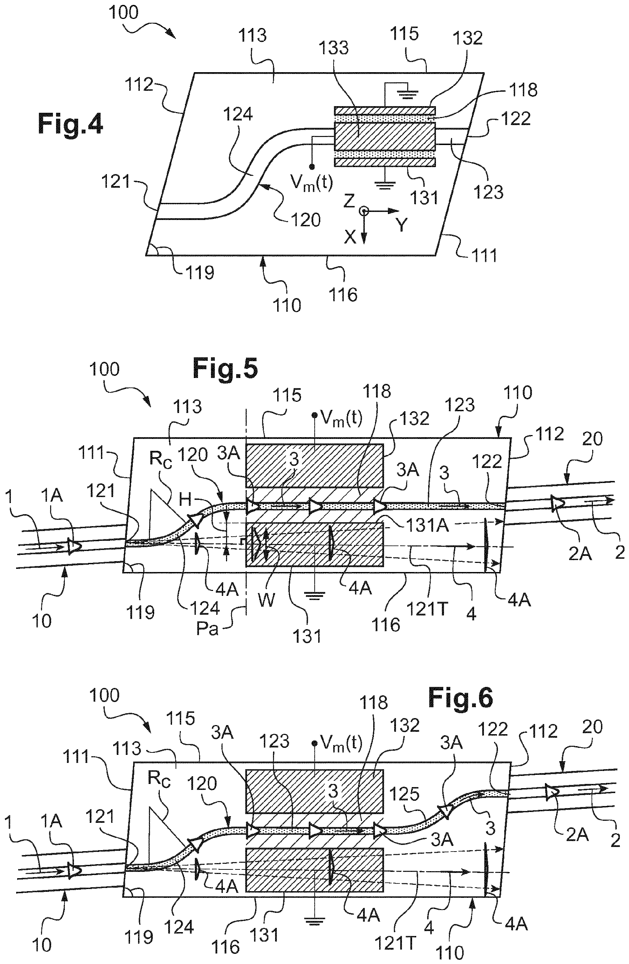

Dans le deuxième mode de réalisation de l'invention représenté sur la figure 4, le substrat 110 est quant à lui coupé selon l'axe Z du cristal de LiNbO₃ de sorte que la face supérieure 113 du substrat 110 soit parallèle au plan X-Y du cristal. Dans ce cas encore, l'axe Y du cristal est orienté parallèlement aux faces latérales 115, 116 du substrat 110 électro-optique.

Dans tous les modes de réalisation, le modulateur 100 de phase est du type intégré et comprend un unique guide d'onde 120 optique qui s'étend de manière continue (voir figure 1 et figures 3 à 8) :
- depuis une extrémité d'entrée 121 de guide située sur la face d'entrée 111 du substrat 110,
- jusqu'à une extrémité de sortie 122 de guide située sur la face de sortie 112 du substrat 110.

Dans la configuration planaire décrite, le guide d'onde 120 s'étend dans un plan parallèle qui est proche de la surface supérieure 113 du substrat 110.

En particulier ici, comme représenté par exemple sur les figures 2 et 3 pour le premier mode de réalisation, le guide d'onde 120 est affleurant à la face supérieure 113 du substrat 110 et présente une section semi-circulaire (voir figure 2) de rayon 3-8 micromètres selon la longueur d'onde de travail visée.

De préférence, le guide d'onde 120 présente une longueur qui est comprise entre 10 millimètres et 100 millimètres.

Ce guide d'onde 120 peut être réalisé dans le substrat 110 de niobate de lithium par un procédé thermique de diffusion du titane dans le cristal de niobate de lithium du substrat ou par un procédé d'échange protonique recuit bien connus de l'homme du métier.

De cette façon, on obtient un guide d'onde 120 optique qui présente un accroissement d'indice Δn_{g} de réfraction optique. Si le procédé de fabrication du guide d'onde optique est la diffusion du titane, les deux indices de réfraction, ordinaire et extraordinaire voient leur valeur augmenter. Le guide réalisé par diffusion de titane peut ainsi supporter les deux états de polarisation. Si le procédé de fabrication du guide d'onde optique est l'échange protonique, dans ce cas seul l'indice de réfraction extraordinaire voit sa valeur augmenter, tandis que l'indice de réfraction ordinaire voit sa valeur diminuer. Le guide d'onde réalisé par échange protonique ne peut ainsi supporter qu'un seul état de polarisation.

Afin d'assurer le guidage de la lumière, cet indice n_{g} de réfraction optique du guide d'onde 120 doit être supérieur à l'indice nₛ de réfraction optique du substrat 110.

De manière générale, plus la différence n_{g} - nₛ d'indice de réfraction optique entre le guide d'onde 120 et ledit substrat 110 électro-optique est élevée, plus élevé est le confinement de la lumière.

De manière avantageuse ici, la différence n_{g} - nₛ d'indice de réfraction optique entre le guide d'onde 120 et ledit substrat 110 électro-optique est comprise dans une gamme allant de 10⁻² à 10⁻³.

Aux fins de moduler l'onde lumineuse incidente 1, le modulateur 100 de phase optique comporte également des moyens de modulation.

Dans les premier et troisième modes de réalisation de l'invention représentés respectivement sur les figures 1-3, 5 et 6-7, où le substrat 110 est coupé selon l'axe X, ces moyens de modulation comportent deux électrodes de modulation 131, 132 disposées au moins partiellement le long du guide d'onde 120, parallèlement et de part et d'autre de celui-ci.

Dans les différents modes de réalisation, ces électrodes de modulation 131, 132 sont plus précisément disposées autour d'une portion rectiligne 123 du guide d'onde 120.

Par ailleurs, comme représenté sur la figure 1, les deux électrodes de modulation 131, 132 comprennent chacune un bord interne 131A, 132A tournés vers le guide d'onde 120. Elles définissent ainsi entre elles un espace inter-électrodes 118 qui s'étend du bord interne 131A de la première électrode de modulation 131 au bord interne 132A de la deuxième électrode de modulation 132.

Les deux électrodes de modulation 131, 132 sont espacées d'une distance E (voir figure 2) supérieure à la largeur du guide d'onde 120 au niveau de la face supérieure 113 du substrat 110 de sorte que les électrodes de modulation 131, 132 ne recouvrent pas le guide d'onde 120. La distance E inter-électrodes, délimitée par les deux bords internes 131A, 132A des électrodes de modulation 131, 132, correspond donc à la dimension transverse, ou largeur, de l'espace inter-électrodes 118.

Par exemple, le guide d'onde 120 a ici une largeur de 3 microns et la distance inter-électrodes E est égale à 10 microns.

Dans le deuxième mode de réalisation de l'invention représenté sur la figure 4, où le substrat 110 est coupé selon l'axe Z, les moyens de modulation comportent trois électrodes de modulation 131, 132, 133 disposées parallèlement audit guide d'onde 120.

La première électrode, ou électrode centrale 133, qui présente une largeur supérieure à celle du guide d'onde 120, est située au-dessus de celui-ci.

Les deuxième et troisième électrodes, ou contre-électrodes 131, 132 latérales, sont quant à elles situées de part et d'autre du guide d'onde 120, chacune espacée d'une distance E' par rapport à l'électrode centrale 133, cette distance E' étant déterminée entre le centre des contre-électrodes latérales 131, 132 et le centre de l'électrode centrale 133.

Par exemple, le guide d'onde 120 ayant ici une largeur de 3 microns et la distance E' entre l'électrode centrale 133 et les contre-électrodes 131, 132 est égale à 10 microns.

De la même manière que précédemment pour le premier mode de réalisation, les deux électrodes de modulation 131, 132 définissent entre elles un espace inter-électrodes 118 (voir figure 4) qui s'étend entre les deux contre-électrodes 131, 132, du bord interne de la deuxième électrode 131 au bord interne de la troisième électrode 132.

De manière classique, les électrodes de modulation 131, 132, 133 sont coplanaires et formées sur la face supérieure 113 du substrat 110 par des techniques connues de photo-lithographie.

Les dimensions (largeur, longueur, et épaisseur) des électrodes de modulation 131, 132, 133 sont déterminées en fonction des contraintes de modulation de phase du modulateur, de la nature et de la géométrie du substrat 110 (dimensions et orientation), de la largeur et de la longueur du guide d'onde 120, et des performances à atteindre.

Les électrodes de modulation 131, 132, 133 sont destinées à être polarisées par une tension de modulation, notée ici Vₘ(t), la tension de modulation étant une tension variable en fonction du temps *t.*

En d'autres termes, cette tension de modulation Vₘ(t) est appliquée entre les électrodes de modulation 131, 132, 133.

Pour cela, l'une des électrodes de modulation est portée à un potentiel électrique égal à la tension de modulation Vₘ(t) (l'électrode 132 dans le cas des premier et troisième modes de réalisation, voir figures 1 et 6 par exemple; l'électrode 133 dans le cas du deuxième mode de réalisation, voir figure 4) alors que l'autre (l'électrode 131 cf. figures 1 et 6 par exemple) ou les autres électrodes (les électrodes 131, 132, cf. figure 4) de modulation sont reliées à la masse. Il est prévu des moyens de commande électrique (non représentés) permettant d'appliquer auxdites électrodes de modulation 131, 132, 133 la consigne souhaitée (amplitude, fréquence, ...) pour la tension de modulation Vₘ(t).

Afin de comprendre les avantages de l'invention, on va tout d'abord décrire brièvement le fonctionnement du modulateur 100 de phase électro-optique.

Le modulateur de phase 100 est conçu pour (voir figure 3) :
- recevoir en entrée l'onde lumineuse incidente 1 pour la coupler en une onde lumineuse guidée 3,
- moduler la phase optique de cette onde lumineuse guidée 3 se propageant dans le guide d'onde 120, et
- coupler l'onde lumineuse guidée 3 en une onde lumineuse émergente 2 délivrée en sortie du modulateur 100, la phase optique de cette onde lumineuse émergente 2 présentant une modulation identique à celle de l'onde lumineuse guidée 3.

Afin de coupler en entrée, et respectivement en sortie, l'onde lumineuse incidente 1, et respectivement l'onde lumineuse émergente 2, le modulateur 100 comporte des moyens de couplage de l'onde lumineuse incidente 1 à l'extrémité d'entrée 121 de guide et des moyens de couplage de l'onde lumineuse émergente 2 à l'extrémité de sortie 122 de guide.

Ces moyens de couplage comprennent ici de préférence des sections 10, 20 de fibre optique (voir figure 3), par exemple une fibre optique de silice, comprenant chacune une gaine 11, 21 entourant un coeur 12, 22 de forme cylindrique dans lequel se propage respectivement l'onde lumineuse incidente 1 (dans le coeur 12) et l'onde lumineuse émergente 2 (dans le coeur 22) présentant ainsi chacune une symétrie de révolution.

On a représenté à titre d'exemple sur la figure 3, l'amplitude 1A de l'onde lumineuse incidente 1 se propageant dans le coeur 12 de la section 10 de fibre optique et l'amplitude 2A de l'onde lumineuse émergente 2A se propageant dans le coeur 22 de la section 20 de fibre optique. Ces amplitudes 1A, 2A correspondent à des modes de propagation dans les sections 10, 20 de fibre optique qui présentent une symétrie cylindrique.

Afin de réaliser le couplage, les sections 10, 20 de fibre optique sont respectivement amenées près de la face d'entrée 111 et de la face de sortie 112 de sorte que le coeur 12, 22 de chaque section 10, 20 de fibre optique soit aligné en regard de l'extrémité d'entrée 121 de guide et respectivement de l'extrémité de sortie 122 de guide.

De manière avantageuse, on peut prévoir d'utiliser une colle d'indice entre les sections 10, 20 de fibre optique et les faces d'entrée 111 et de sortie 112 du substrat 110 pour, d'une part, fixer lesdites sections 10, 20 de fibre optique au substrat 110, et, d'autre part, figer l'alignement optique et mécanique entre le coeur 12, 22 de la fibre 10, 20 par rapport aux extrémités d'entrée 121 et de sortie 122 du guide d'onde 120.

En entrée, l'onde lumineuse incidente 1 qui se propage le long du coeur 12 de la section 10 de fibre optique en direction du substrat 110 est partiellement couplée dans le guide d'onde 120 optique au niveau de l'extrémité d'entrée 121 de guide sous la forme de l'onde lumineuse guidée 3 (voir flèches sur la figure 3).

Cette onde lumineuse guidée 3 se propage alors de manière guidée optiquement suivant le chemin optique du guide d'onde 120 optique entre l'extrémité d'entrée 121 et l'extrémité de sortie 122 de guide.

L'onde lumineuse guidée 3 présente une amplitude 3A telle que représentée schématiquement sur la figure 5.

À cause des réflexions partielles de l'onde lumineuse guidée 3 sur la face d'entrée 111 et la face de sortie 112, il peut se créer des interférences dans le guide d'onde 120 de sorte que l'amplitude 3A de l'onde lumineuse guidée 3 peut présenter une modulation d'amplitude résiduelle relativement élevée.

Néanmoins, grâce à l'angle 119 du substrat 110, ce phénomène d'interférences est fortement réduit de sorte que la modulation d'amplitude résiduelle due à ces réflexions parasites devient négligeable.

Lorsque les moyens de commande électrique appliquent la tension de modulation Vₘ(t) entre les électrodes de modulation 131, 132, 133, un champ électrique externe, proportionnel à cette tension de modulation Vₘ(t), est créé au voisinage des électrodes de modulation 131, 132, 133, plus précisément dans une zone de modulation d'indice 117 (voir figures 2 et 3 par exemple) correspondant à la région du substrat 110 et du guide d'onde 120 situé dans l'espace inter-électrodes 118.

Cette zone de modulation d'indice 117 s'étend dans le substrat 110 à partir de l'espace inter-électrodes 118. Plus précisément, la zone de modulation d'indice 117 s'étend spatialement autour du guide d'onde 120, ici de sa portion rectiligne 123, dans une direction transverse à celui-ci, sur une distance au moins égale à la dimension (i.e. longueur) des électrodes le long du guide d'onde 120.

Par effet Pockels, l'indice de réfraction optique n_{g} du guide d'onde est modifié par ce champ électrique externe. De manière connue, la variation de l'indice de réfraction optique est proportionnelle à l'amplitude du champ électrique externe, le coefficient de proportionnalité dépendant à la fois de la nature du matériau et de la géométrie des électrodes de modulation 131, 132, 133.

De plus, en fonction de l'orientation du champ électrique externe par rapport aux axes optiques du substrat 110, cette variation au voisinage des électrodes de modulation 131, 132, 133 peut être positive ou négative avec respectivement une augmentation et une diminution des indices de réfraction optique nₛ, n_{g} du substrat 110 et du guide d'onde 120 dans la zone de modulation d'indice 117.

Lors de la propagation de l'onde lumineuse guidée 3 dans le guide d'onde 120, cette variation de l'indice de réfraction optique n_{g} du guide d'onde 120 introduit sur la phase optique de l'onde lumineuse guidée 3 se propageant dans le guide d'onde 120 optique, un déphasage de modulation, qui est fonction de l'amplitude du champ électrique externe et donc de l'amplitude de la tension de modulation Vₘ(t) qui varie en fonction du temps t.

En fonction du signe de la tension de modulation Vₘ(t), et donc de l'orientation du champ électrique externe par rapport aux axes optiques du substrat 110, ce déphasage de modulation peut être positif ou négatif, associé respectivement à un retard ou à une avance de phase optique de l'onde lumineuse guidée 3.

De cette façon, grâce aux électrodes de modulation 131, 132, 133, la phase optique de l'onde lumineuse guidée 3 peut être modulée.

On revient maintenant au couplage de l'onde lumineuse incidente 1 dans le guide d'onde 120 optique.

Lors de ce couplage, à cause de la différence de distribution spatiale d'indice de réfraction entre le coeur 12 de la section 10 de fibre optique et le guide d'onde 120 dans le substrat 110, une partie de l'onde lumineuse incidente 1 est diffractée à l'extrémité d'entrée 121 de guide, de sorte qu'une onde lumineuse non guidée 4 dans le guide d'onde 120 se propage dans le substrat 110 (voir figure 3).

Cette onde lumineuse non guidée 4 peut, si elle traverse la zone de modulation d'indice 117, être guidée et confinée dans cette zone de modulation d'indice 117 de sorte que cette onde lumineuse non guidée 4 ne diffracte plus et ne diverge plus dans la zone de modulation d'indice 117, si bien qu'elle peut se recoupler avec l'onde lumineuse guidée 3 dans la section 20 de la fibre optique de sortie.

Cette onde lumineuse non guidée 4, dont l'amplitude 4A est représentée sur la figure 3, peut interférer à l'extrémité de sortie 122 de guide avec l'onde lumineuse guidée 3 dans le guide d'onde 120, créant ainsi une modulation d'amplitude résiduelle sur l'onde lumineuse émergente 2 à la sortie du modulateur 100.

Selon l'invention, afin d'empêcher ces interférences et limiter la modulation d'amplitude résiduelle, le guide d'onde 120 optique du modulateur 100 est non rectiligne et présente une première portion courbe 124 de guide (voir figures 1, et 4 à 7) entre l'extrémité d'entrée 121 de guide et les électrodes de modulation 131, 132, 133.

Cette première portion courbe 124 de guide présente une forme et des dimensions sélectionnées pour décaler latéralement l'espace inter-électrodes 118 par rapport à la direction de propagation de l'onde lumineuse non guidée 4.

Plus précisément, selon l'invention, la première portion courbe 124 de guide est telle que le prolongement d'une direction tangente 121T au guide d'onde 120 sur la face d'entrée 111 s'écarte de l'espace inter-électrodes 118.

Autrement formulé, il convient pour éviter le piégeage de l'onde lumineuse non guidée 4 dans la zone de modulation d'indice 117 que le plan de réfraction, associé à l'onde lumineuse incidente 1 en entrée du guide d'onde 120 et contenant notamment la direction tangente 121T, n'intercepte pas l'espace inter-électrodes 118.

La direction tangente 121T au guide d'onde 120 sur la face d'entrée 121 correspond classiquement à la direction principale de réfraction de l'onde lumineuse incidente 1 dans le guide d'onde 120, ou plus précisément ici à la projection de cette direction principale sur l'une des faces supérieure 113 ou inférieure 114.

En d'autres termes, cette direction tangente 121T correspond à la direction principale de propagation de l'onde lumineuse guidée 3 dans le guide d'onde 120 à l'extrémité d'entrée 121 de guide. Néanmoins, après entrée dans le guide d'onde 120, l'onde lumineuse guidée 3 suit le chemin optique du guide d'onde 120 de sorte qu'elle parvient sur la face de sortie 112 au niveau de l'extrémité de sortie 122 de guide.

De la même manière, l'onde lumineuse non guidée 4 se propage librement dans le substrat 110 de l'extrémité d'entrée 121 de guide jusque vers la face de sortie 112 du substrat 110, avec une direction principale de propagation 121P (voir figure 3) coplanaire avec la direction tangente 121T dans le plan de réfraction.

Ainsi, à la lumière de la figure 5, on comprend que grâce à la première portion courbe 124 de guide, l'onde lumineuse non guidée 4 ne traverse plus la zone de modulation d'indice 117 qui s'étend dans le substrat 110 à partir de l'espace inter-électrodes 118, de sorte que l'onde lumineuse non guidée 4 n'est plus guidée dans le substrat 110, sous les électrodes de modulation 131, 132.

L'onde lumineuse non guidée 4 se propage alors dans le substrat 110 selon la trajectoire représentée sur la figure 3 même lors de l'application d'une tension de modulation Vₘ(t) entre les électrodes 131, 132 de modulation.

De plus, comme le montre également la figure 5, l'onde lumineuse non guidée 4 diverge et présente une amplitude 4A qui, par diffraction, va s'étaler au fur et à mesure de la propagation, de sorte que l'onde lumineuse non guidée se recouvre seulement partiellement avec l'onde lumineuse guidée 3 au niveau de l'extrémité de sortie 122 de guide, si bien qu'elles ne peuvent plus autant interférer entre elles et entraîner une modulation d'amplitude résiduelle sur l'onde lumineuse émergente 2 en sortie du modulateur 100.

Comme cela est représenté sur les figures 1 et 5, la première portion courbe 124 de guide introduit un écart, référencé H dans la suite de la description, entre l'onde lumineuse non guidée 4 et l'espace inter-électrodes 118.

Plus précisément, cet écart H correspond (voir figure 1 par exemple) à la distance entre la direction tangente 121T et le bord interne 131A de la première électrode 131 qui est située entre le guide d'onde 120 optique et la direction tangente 121T.

En d'autres termes, l'écart H est ici égal à la distance entre :
- le plan comprenant la direction tangente 121T et orthogonal à la face supérieure 113 su substrat 110, et
- le plan tangent au bord interne 131A et orthogonal à la face supérieure 113 du substrat 110.

Cet écart H est mesuré dans un plan avant Pₐ (cf. figure 1) qui est, d'une part, perpendiculaire à la direction tangente 121T, et, d'autre part, comprenant un bord avant 131C de la première électrode 131.

De manière avantageuse, la forme et les dimensions de la première portion courbe 124 de guide sont déterminées de sorte que l'écart H introduit par cette première portion courbe 124 de guide est supérieur à une valeur seuil Hₘᵢₙ prédéterminée.

De cette façon, l'onde lumineuse non guidée 4 reste à distance de l'espace inter-électrodes 118 si bien que l'onde lumineuse non guidée 4 ne peut être piégée par la zone de modulation d'indice 117.

L'onde lumineuse non guidée étant diffractée dans le substrat 110, elle présente une amplitude 4A (voir figure 3) dont l'étendue, ou extension spatiale w (voir figure 5) dans le plan avant Pₐ précédemment défini, s'accroît au cours de la propagation entre la face d'entrée 111 et la face de sortie 112.

Afin d'éviter le piégeage par la zone de modulation d'indice 117, la valeur seuil Hₘᵢₙ est prédéterminée en fonction de l'extension spatiale w de l'onde lumineuse non guidée 4.

De préférence, la valeur seuil Hₘᵢₙ est prédéterminée comme étant supérieure ou égale à w/2 de sorte que seule une faible partie de l'onde lumineuse non guidée peut encore passer dans la zone de modulation d'indice 117, au voisinage de l'espace inter-électrodes 118.

Encore plus préférentiellement, pour tenir compte de la largeur E de l'espace inter-électrodes 118 (cf. figure 2), la valeur seuil prédéterminée Hₘᵢₙ est prédéterminée comme étant égale à w/2 + E.

La première portion courbe 124 de guide présente ici une forme de S (voir figure 5) avec deux courbures opposées présentant chacune un rayon de courbure R_{C} (voir figure 5) dont la valeur est supérieure à une valeur minimale R_{C,min} prédéterminée de sorte que les pertes optiques induites par cette première portion courbe 124 de guide sont inférieures à 0,5 dB.

Cette valeur minimale R_{C,min} du rayon de courbure est, de préférence, supérieure ou égale à 20 mm.

Afin de réduire encore plus la partie de l'onde lumineuse non guidée 4 qui se recouple dans la fibre de sortie 20 avec l'onde lumineuse guidée, on peut prévoir dans un troisième mode de réalisation représenté sur la figure 6, que le guide d'onde 120 optique présente, en plus de la première portion courbe 124 de guide, au moins une deuxième portion courbe 125 de guide entre les deux électrodes de modulation 131, 132 et l'extrémité de sortie 122 de guide.

Dans le cas de l'exemple représenté sur la figure 6, les deux portions courbes 124, 125 de guide sont ici identiques et en forme de S. Par ailleurs, leur rayon de courbure R_{C} (représenté sur la figure 6 que pour la première portion courbe 124) est identique au rayon de courbure de la première portion courbe de guide dans l'exemple donné pour le premier mode de réalisation (voir figure 5).

Bien évidemment, dans des variantes, il est possible d'utiliser une ou plusieurs autres portions courbes de guide dans le modulateur de phase électro-optique en plus de la première portion courbe de guide.

De cette façon, pour une valeur fixée du décalage spatial H, il est possible d'utiliser des portions courbes 124, 125 de guide ayant des courbures plus faibles et introduisant moins de pertes dans le modulateur 100.

De la même manière, pour une valeur fixée du rayon de courbure R_{C}, on obtient alors un décalage spatial H plus important.

Afin de réduire encore plus la modulation d'amplitude résiduelle, le modulateur 100 peut comprendre des moyens de polarisation électrique du substrat 110 électro-optique pour générer, dans celui-ci, un champ électrique permanent qui diminue l'indice nₛ de réfraction optique du substrat 110 au voisinage du guide d'onde 120.

De manière générale, ces moyens de polarisation électrique comprennent des électrodes et des moyens de commande électrique pour appliquer, entre ces électrodes, une tension électrique.

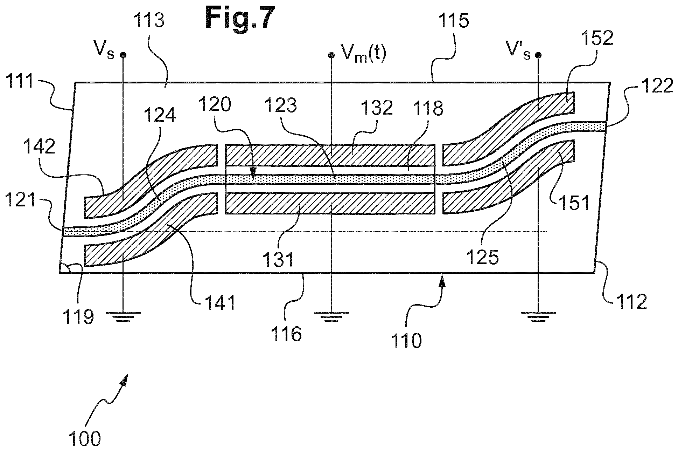

Ainsi, dans un troisième mode de réalisation du modulateur 100 de phase électro-optique représenté sur la figure 7, les moyens de polarisation électrique du modulateur 100 de phase électro-optique comprennent ici :
- une première paire d'électrodes de polarisation 141, 142, distinctes et séparées des électrodes de modulation 131, 132, les électrodes de polarisation 141, 142 étant disposées parallèlement au guide d'onde 120, ici entre l'extrémité d'entrée 121 de guide et les électrodes de modulation 131, 132, et
- une deuxième paire d'électrodes de polarisation 151, 152, distinctes et séparées des électrodes de modulation 131, 132, les électrodes de polarisation 151, 152 étant disposées parallèlement au guide d'onde 120 entre l'extrémité de sortie 122 de guide et les électrodes de modulation 131, 132.

Comme le montre bien la figure 7, les électrodes de polarisation 141, 142, 151, 152 sont dans ce cas également courbes de manière à suivre la courbure du guide d'onde 120 optique dans ses portions courbes 124, 125 de guide.

La première paire d'électrodes de polarisation 141, 142 est destinée à être polarisée par une première tension de polarisation Vₛ appliquée entre les électrodes de modulation 141, 142 grâce à des moyens supplémentaires de commande électrique, pour générer un champ électrique permanent qui diminue l'indice n_{g} de réfraction optique du substrat 110 au voisinage du guide d'onde 120, ici dans une région du substrat 110 située sous ces électrodes de polarisation 141, 142 supplémentaires.

De la même manière, la deuxième paire d'électrodes de polarisation 151, 152 est destinée à être polarisée par une deuxième tension de polarisation V'ₛ appliquée entre les électrodes de polarisation 151, 152 grâce aux moyens supplémentaires de commande électrique, pour générer un autre champ électrique permanent dans le substrat 110 électro-optique, ici sous les deux autres électrodes de polarisation 151, 152 supplémentaire pour diminuer l'indice nₛ de réfraction optique dudit substrat 110 au voisinage du guide d'onde 120.

De préférence, les tensions de polarisation V_{S}, V'_{S} sont constantes dans le temps de sorte que les champs électriques permanents générés au voisinage du guide d'onde 120 par effet *Pockels,* sont également constants.

Grâce à ces champs électriques permanents qui diminuent l'indice n_{S} de réfraction optique du substrat 110 au voisinage du guide d'onde 120, l'onde lumineuse non guidée 4 du guide d'onde 120 est déviée vers la face inférieure 114 du substrat 110 de sorte que sa trajectoire s'écarte du guide d'onde 120.

De cette façon, l'onde lumineuse non guidée 4 qui est déviée ne se recouvre plus avec l'onde lumineuse guidée 3 au niveau de l'extrémité de sortie 122 de guide, si bien qu'elles ne peuvent plus interférer entre elles et entraîner une modulation d'amplitude résiduelle sur l'onde lumineuse émergente 2 en sortie du modulateur 100.

Dans un mode de réalisation alternatif, on pourrait n'utiliser qu'une seule paire d'électrodes de polarisation. Dans ce cas alors, on place de préférence la seule paire d'électrodes de polarisation 141, 142 supplémentaires près de l'extrémité d'entrée 121 de guide, de sorte que l'onde lumineuse non guidée 4 est déviée dès le début de sa propagation dans le substrat 110.

Les champs électriques permanents générés par les moyens de polarisation électrique sont tels que la différence d'indice de réfraction optique induite dans le substrat 110 électro-optique est de préférence comprise dans une gamme allant de 10⁻⁵ à 10⁻⁶.

Grâce aux moyens de polarisation électrique, le modulateur 100 peut mettre en oeuvre un procédé de modulation comprenant une étape de polarisation de ces moyens de polarisation électrique.

Lors de cette étape de polarisation, on génère le champ électrique permanent, ici par application de la tension additionnelle de polarisation Vₛ, de manière à diminuer l'indice nₛ de réfraction optique du substrat 110 électro-optique au voisinage du guide d'onde 120.

Des essais ont montré qu'avec deux paires identiques d'électrodes de polarisation 141, 142, 151, 152 supplémentaires, chaque électrode de polarisation 141, 151 étant espacée de 10 micromètres de l'autre électrode de polarisation de la même paire, chaque paire d'électrodes de polarisation 141, 142, 151, 152 étant polarisées avec une tension de polarisation égale à 2,5 volts, on parvenait à réduire la modulation d'amplitude résiduelle de 10 dB ou plus.

En variante, les moyens de polarisation électrique peuvent comprendre les électrodes de modulation et les moyens de commande électrique associés.

Lorsqu'une tension additionnelle de polarisation V_{S}, est appliquée entre les électrodes de modulation en plus de la tension de modulation Vₘ(t), de sorte que la tension totale appliquée soit égale à Vₘ(t)+V_{S}, un champ électrique permanent est généré dans une région de polarisation du substrat située au voisinage du guide d'onde, à proximité et sous les électrodes de modulation.

De préférence, cette tension additionnelle de polarisation Vₛ est constante dans le temps de sorte que le champ électrique permanent généré dans la région de polarisation est également constant.

Afin de dévier l'onde lumineuse non guidée loin du guide d'onde, la tension additionnelle de polarisation Vₛ est ajustée de sorte que le champ électrique permanent dans le substrat diminue, par effet Pockels, l'indice nₛ de réfraction optique du substrat électro-optique au voisinage du guide d'onde dans la région de polarisation.

L'onde lumineuse non guidée est alors déviée de sorte que sa trajectoire s'écarte de la région de polarisation d'indice plus faible que le reste du substrat.

De cette façon, l'onde lumineuse non guidée ne se recouvre pas non plus avec l'onde lumineuse guidée au niveau de l'extrémité de sortie de guide, si bien qu'elles ne peuvent plus interférer entre elles et entraîner une modulation d'amplitude résiduelle sur l'onde lumineuse émergente en sortie du modulateur.

Avec des électrodes de modulation de longueur 40 millimètres, espacées de 10 micromètres, entre lesquelles une tension de polarisation de 5 à 10 volts est appliquée, on réduit la modulation d'amplitude résiduelle de 10 décibels ou plus.

En pratique, on applique sur lesdites électrodes de modulation la tension totale Vₘ(t)+Vₛ de manière à simultanément moduler l'onde lumineuse guidée dans le guide d'onde et à dévier l'onde lumineuse non guidée vers la face inférieure du substrat.

De préférence, on ajuste l'amplitude de la tension additionnelle de polarisation Vₛ de telle sorte que le signe, positif ou négatif, de la tension totale Vₘ(t) + Vₛ appliquée sur les électrodes de modulation soit constant.

Par exemple, lorsque la tension de modulation Vₘ(t) est une modulation en créneaux carrés périodiques, prenant alternativement des valeurs positives et négatives, par exemple +1 V et -1 V, on peut choisir une tension additionnelle de polarisation Vₛ constante et égale à -5 V de sorte que la tension totale Vₘ(t) + Vₛ appliquée soit toujours négative.

La tension additionnelle de polarisation Vₛ étant constante, elle est associée à une avance ou un retard additionnel de phase optique de l'onde lumineuse guidée dans le guide d'onde, avance ou retard qui est donc constant en fonction du temps. Aussi, l'application de cette tension additionnelle de polarisation Vₛ sur les électrodes de modulation ne perturbe pas la modulation de la phase optique de l'onde lumineuse guidée.

## Revendications

1. Modulateur (100) de phase électro-optique, destiné à moduler la phase optique d'une onde lumineuse incidente (1) sur ledit modulateur (100), comportant :
- un substrat (110) électro-optique optiquement transparent comprenant une face d'entrée (111), une face de sortie (112), deux faces latérales (115, 116), une face inférieure (114) et une face supérieure (113), lesdites faces inférieure (114) et supérieure (113) s'étendant entre la face d'entrée (111) et la face de sortie (112), ladite face supérieure (113) étant plane et opposée à ladite face inférieure (114),
- un guide d'onde (120) optique qui s'étend, dans un plan parallèle à ladite face supérieure (113), entre une extrémité d'entrée (121) de guide située sur ladite face d'entrée (111) du substrat (110) et une extrémité de sortie (122) de guide située sur ladite face de sortie (112) du substrat (110), ladite onde lumineuse incidente (1) étant partiellement couplée dans ledit guide d'onde (120) optique en une onde lumineuse guidée (3) se propageant de manière guidée optiquement suivant le chemin optique dudit guide d'onde (120) optique entre ladite extrémité d'entrée (121) et ladite extrémité de sortie (122) de guide, et
- au moins deux électrodes (131, 132, 133) qui sont disposées au moins partiellement le long dudit guide d'onde (120), parallèlement et de part et d'autre de celui-ci et qui définissent entre elles un espace inter-électrodes (118), lesdites électrodes (131, 132, 133) permettant d'introduire, lorsqu'une tension de modulation (Vₘ) est appliquée entre elles, un déphasage de modulation, fonction de ladite tension de modulation (Vₘ), sur ladite onde lumineuse guidée (3) se propageant dans ledit guide d'onde (120) optique,
ledit guide d'onde (120) optique présentant au moins une première portion courbe (124) de guide entre ladite extrémité d'entrée (121) et lesdites au moins deux électrodes (131, 132), de telle sorte que le prolongement d'une direction tangente (121T) audit guide d'onde (120) sur ladite face d'entrée (111) s'écarte dudit espace inter-électrodes (118), l'écart H introduit par la première portion courbe (124) de guide correspondant à la distance entre ladite direction tangente (121T) et un bord interne (131A) d'une première électrode (131) située entre ledit guide d'onde (120) optique et ladite direction tangente (121T), cette distance étant mesurée dans un plan avant (Pₐ) perpendiculaire à ladite tangente (121T) comprenant un bord avant (131C) de ladite première électrode (131),
ladite onde lumineuse incidente (1) étant partiellement couplée dans ledit substrat (110) en une onde lumineuse (4) qui se propage de manière non guidée optiquement dans ledit substrat (110) et qui présente, dans ledit plan avant (Pₐ), une extension spatiale w,
**caractérisé en ce que** cet écart H est supérieur à une valeur seuil Hₘᵢₙ prédéterminée, ladite valeur seuil Hₘᵢₙ prédéterminée est supérieure ou égale à la moitié de ladite extension spatiale w de l'onde lumineuse non guidée (4).

2. Modulateur (100) de phase selon la revendication 1, dans lequel ledit espace inter-électrodes (118) présente une largeur (E), et la valeur seuil prédéterminée Hₘᵢₙ est égale à w/2 + E.

3. Modulateur (100) de phase électro-optique selon l'une des revendications 1 et 2, dans lequel ledit guide d'onde (120) optique présente au moins une deuxième portion courbe (125) de guide entre lesdites au moins deux électrodes (131, 132) et ladite extrémité de sortie (122) de guide.

4. Modulateur (100) de phase électro-optique selon l'une des revendications 1 à 3, dans lequel la première portion courbe (124) de guide et/ou la deuxième portion courbe (125) de guide présente une forme de S.

5. Modulateur (100) de phase électro-optique selon l'une des revendications 1 à 4, dans lequel la première portion courbe (124) de guide et/ou la deuxième portion courbe (125) de guide présente un rayon de courbure R_{C} dont la valeur est supérieure à une valeur minimale R_{C,min} égale à 20 mm.

6. Modulateur (100) de phase électro-optique selon l'une des revendications 1 à 5, comportant une troisième électrode de modulation (133) formée sur ladite face supérieure (113) du substrat (110), au-dessus dudit guide d'onde (120) optique, et présentant une largeur supérieure à celle dudit guide d'onde (120) optique.

7. Modulateur (100) de phase électro-optique selon l'une des revendications 1 à 6, comportant au moins une paire d'électrodes de polarisation (141, 142) disposées parallèlement audit guide d'onde (120) optique, entre ladite extrémité d'entrée (121) de guide et lesdites électrodes de modulation (131, 132).

8. Modulateur (100) de phase électro-optique selon l'une des revendications 1 à 7, comportant une autre paire d'électrodes de polarisation (151, 152) disposées parallèlement audit guide d'onde (120) optique, entre lesdites électrodes de modulation (131, 132) et ladite extrémité de sortie (122).

9. Modulateur (100) de phase électro-optique selon l'une des revendications 1 à 8, dans lequel ledit substrat (110) est un parallélépipède non droit, tel que ladite face d'entrée (111) et l'une des faces latérales(116) présente un angle (119) inférieur à 90°.

## Patentansprüche

1. Elektrooptischer Phasenmodulator (100), dazu bestimmt, die optische Phase einer auf den Modulator (100) auftreffenden einfallenden Lichtwelle (1) zu modulieren, mit
- einem optisch durchsichtigen elektrooptischen Substrat (110), das eine Eingangsseite (111), eine Ausgangsseite (112), zwei seitliche Seiten (115, 116), eine Unterseite (114) und eine Oberseite (113) aufweist, wobei sich die Unterseite (114) und die Oberseite (113) zwischen der Eingangsseite (111) und der Ausgangsseite (112) erstrecken, wobei die Oberseite (113) eben ist und der Unterseite (114) gegenüberliegt,
- einem optischen Wellenleiter (120), der sich in einer zur Oberseite (113) parallelen Ebene zwischen einem auf der Eingangsseite (111) des Substrats (110) gelegenen Eingangssende (121) des Leiters und einem auf der Ausgangsseite (112) des Substrats (110) gelegenen Ausgangsende (122) des Leiters erstreckt, wobei die einfallende Lichtwelle (1) teilweise in den optischen Wellenleiter (120) als geführte Lichtwelle (3), die sich in optisch geführter Weise entlang des optischen Wegs des optischen Wellenleiters (120) zwischen dem Eingangsende (121) und dem Ausgangsende (122) des Leiters ausbreitet, eingekoppelt ist, und
- wenigstens zwei Elektroden (131, 132, 133), die wenigstens teilweise entlang des Wellenleiters (120) parallel zueinander und beiderseits desselben angeordnet sind und die zwischen sich einen Elektrodenzwischenraum (118) definieren, wobei die Elektroden (131, 132, 133) ermöglichen, wenn eine Modulationsspannung (Vₘ) zwischen ihnen angelegt ist, an der sich im optischen Wellenleiter (120) ausbreitenden geführten Lichtwelle (3) eine von der Modulationsspannung (Vₘ) abhängige Phasenmodulation auszuführen,
wobei der optische Wellenleiter (120) wenigstens einen ersten gekrümmten Leiterabschnitt (124) zwischen dem Eingangsende (121) und den wenigstens zwei Elektroden (131, 132) derart aufweist, daß die Verlängerung einer am Wellenleiter (120) tangentialen Richtung (121T) auf der Eingangsseite (111) zum Elektrodenzwischenraum (118) einen Abstand aufweist, wobei der vom ersten gekrümmten Leiterabschnitt (124) eingeführte Abstand H dem Abstand zwischen der tangentialen Richtung (121T) und einem inneren Rand (131A) einer zwischen dem optischen Wellenleiter (120) und der tangentialen Richtung (121T) liegenden ersten Elektrode (131) entspricht, wobei der Abstand in einer zur Tangente (121T) senkrechten, einen vorderen Rand (131C) der ersten Elektrode (131) aufweisenden vorderen Ebene (Pₐ) gemessen wird, wobei die einfallende Lichtwelle (1) teilweise in das Substrat (110) als eine Lichtwelle (4) eingekoppelt ist, die sich in optisch nicht geführter Weise im Substrat (110) ausbreitet und die in der vorderen Ebene (Pₐ) eine räumliche Ausdehnung w aufweist,
**dadurch gekennzeichnet, daß** der Abstand H größer als ein vorbestimmter Schwellwert Hₘᵢₙ ist, wobei der vorbestimmte Schwellwert Hₘᵢₙ größer als oder gleich der Hälfte der räumlichen Ausdehnung w der nicht geführten Lichtwelle (4) ist.

2. Phasenmodulator (100) gemäß Anspruch 1, bei dem der Elektrodenzwischenraum (118) eine Breite (E) aufweist und der vorbestimmte Schwellwert Hₘᵢₙ gleich w/2 + E ist.

3. Elektrooptischer Phasenmodulator (100) gemäß einem der Ansprüche 1 und 2, bei dem der optische Wellenleiter (120) zwischen den wenigstens zwei Elektroden (131, 132) und dem Ausgangsende (122) des Leiters wenigstens einen zweiten gekrümmten Abschnitt (125) des Leiters aufweist.

4. Elektrooptischer Phasenmodulator (100) gemäß einem der Ansprüche 1 bis 3, bei dem der erste gekrümmte Abschnitt (124) des Leiters und/oder der zweite gekrümmte Abschnitt (125) des Leiters s-förmig ist.

5. Elektrooptischer Phasenmodulator (100) gemäß einem der Ansprüche 1 bis 4, bei dem der erste gekrümmte Abschnitt (124) des Leiters und/oder der zweite gekrümmte Abschnitt (125) des Leiters einen Krümmungsradius R_{c} aufweist bzw. aufweisen, dessen Wert größer als ein minimaler Wert R_{c min} gleich 20 mm ist.

6. Elektrooptischer Phasenmodulator (100) gemäß einem der Ansprüche 1 bis 5, der eine dritte Modulationselektrode (133) aufweist, die auf der Oberseite (113) des Substrats (110) über dem optischen Wellenleiter (120) gebildet ist und eine größere Breite als jene des optischen Wellenleiters (120) aufweist.

7. Elektrooptischer Phasenmodulator (100) gemäß einem der Ansprüche 1 bis 6, der wenigstens ein Paar Polarisationselektroden (141, 142) aufweist, die parallel zum optischen Wellenleiter (120) zwischen dem Eingangsende (121) des Leiters und den Modulationselektroden (131, 132) angeordnet sind.

8. Elektrooptischer Phasenmodulator (100) gemäß einem der Ansprüche 1 bis 7, der ein weiteres Paar Polarisationselektroden (151, 152) aufweist, die parallel zum optischen Wellenleiter (120) zwischen den Modulationselektroden (131, 132) dem Ausgangsende (122) angeordnet sind.

9. Elektrooptischer Phasenmodulator (100) gemäß einem der Ansprüche 1 bis 8, bei dem das Substrat (110) ein nicht gerades Parallelepiped derart ist, daß die Eingangsseite (111) und eine der seitlichen Seiten (116) einen Winkel (119) von weniger als 90° bilden.

## Claims

1. An electro-optic phase modulator (100), intended to modulate the optical phase of a lightwave (1) incident on said modulator (100), including:
- an optically transparent electro-optic substrate (110), comprising an entrance face (111), an exit face (112), two lateral faces (115, 116), a lower face (114) and an upper face (113), said lower (114) and upper (113) faces extending between the entrance face (111) and the exit face (112), said upper face (113) being planar and opposite to said lower face (114),
- an optical waveguide (120) that extends, in a plane parallel to said upper face (113), between a guide entrance end (121) located on said entrance face (111) of the substrate (110) and a guide exit end (122) located on said exit face (112) of the substrate (110), said incident lightwave (1) being partially coupled in said optical waveguide (120) into a guided lightwave (3) propagating in an optically guided manner along the optical path of said optical waveguide (120) between said guide entrance end (121) and exit end (122), and
- at least two electrodes (131, 132, 133) that are arranged at least partially along said waveguide (120), parallel to and on either side of the latter, and that define between each other an inter-electrode gap (118), said electrodes (131, 132, 133) allowing to introduce, when a modulation voltage (Vₘ) is applied between them, a modulation phase-shift, function of said modulation voltage (Vₘ), on said guided lightwave (3) propagating in said optical waveguide (120),
said optical waveguide (120) having at least one first curved guide portion (124) between said entrance end (121) and said at least two electrodes (131, 132), so that the extension of a direction (121T) tangent to said waveguide (120) on said entrance face (111) deviate from said inter-electrode gap (118), the gap H introduced by the first curved guide portion (124) corresponding to the distance between said tangent direction (121T) and an inner edge (131A) of a first electrode (131) located between said optical waveguide (120) and said tangent direction (121T), this distance being measured in a front plane (Pₐ) perpendicular to said tangent (121T) comprising a front edge (131C) of said first electrode (131),
said incident lightwave (1) being partially coupled in said substrate (110) into a lightwave (4) that propagates in a non-optically guided manner in said substrate (110) and that has, in said front plane (Pₐ), a spatial extension w,
**characterized in that** said gap H is higher than a predetermined threshold value Hₘᵢₙ, said predetermined threshold value Hₘᵢₙ being higher than or equal to half of said spatial extension w of the non-optically guided lightwave (4).

2. The phase modulator (100) according to claim 1, wherein said inter-electrode gap (118) has a width E, and wherein the predetermined threshold value Hₘᵢₙ is equal to w/2 + E.

3. The electro-optic phase modulator (100) according to claim 1 or 2, wherein said optical waveguide (120) has at least one second curved guide portion (125) between said at least two electrodes (131, 132) and said guide exit end (122).

4. The electro-optic phase modulator (100)according to any of claims 1 to 3, wherein the first curved guide portion (124) and/or the second curved guide portion (125) has a S-shape.

5. The electro-optic phase modulator (100) according to any of claims 1 to 4, wherein the first curved guide portion (124) and/or the second curved guide portion (125) has a radius of curvature R_{C} whose value is higher than a predetermined minimum value R_{C,min} equal to 20 mm.

6. The electro-optic phase modulator (100) according to any of claims 1 to 5, including a third modulation electrode (133) formed on said upper face (113) of the substrate (110), above said optical waveguide (120), and having a width higher than that of said optical waveguide (120).

7. The electro-optic phase modulator (100) according to any of claims 1 to 6, including at least one pair of polarization electrodes (141, 142) arranged parallel to said optical waveguide (120), between said guide entrance end (121) and said modulation electrodes (131, 132).

8. The electro-optic phase modulator (100) according to any of claims 1 to 7, including another pair of polarization electrodes (151, 152) arranged parallel to said optical waveguide (120), between said modulation electrodes (131, 132) and said exit end (122) .

9. The electro-optic phase modulator (100) according to any of claims 1 to 8, wherein said substrate (110) is a non-straight parallelepiped, such that said entrance face (111) and one of the lateral faces (116) form an angle (119) lower than 90°.
